# EUROPEAN PATENT APPLICATION

(11) **EP 3 501 793 A1**
(43) Date of publication of application: **26.06.2019**
(21) Application number: 17209611.7
(22) Date of filing: 21.12.2017
(51) Int. Cl.: B29C 64/106, B29C 64/209, B29C 64/336, B29C 64/329, B33Y 30/00, B33Y 40/00

(54) **PRE-MIXING AND FEEDING ASSEMBLY AND PRINTHEAD FOR 3D PRINTING SETUP**

(71) Applicant: ETH Zurich, 8092 Zurich (CH)
(72) Inventor: STUDART, André R., 8044 Zürich (CH); SCHAFFNER, Manuel, 8003 Zürich (CH); STEFANOV, Petar, 8306 Brüttisellen (CH)

(57) **Abstract**

Part of the disclosed invention is an ambient-temperature or temperated pre-mixing and feeding assembly (1) with a plurality of containers (110, 110'), feeding means and a feed hopper (1120) for pre-mixing and providing at least one or more materials in granule, pellet or powder form, for transport to a printhead (2) of a 3D printing setup, for transport materials to a printhead (2) of a 3D printing setup, which improves a 3D printing setup to continuously feed, mix and extrude granule material with thermoplastic and thermoplastic elastomers in granule, pellet or powder form in controlled ratios, reaching a desired controlled melt composition. This is reached by a pre-mixing and feeding assembly (1) comprising
a material inlet assembly (11), comprising the plurality of containers (110, 110'), the feeding means (111, 111') connected to the container (110, 110'), an inlet valve (112) with the feed hopper (1120) for dosed pre-mixing of raw material and a material mix feed hose (12), for transportation of pre-mixed material mix from the feed hopper (1120) and the inlet valve (112) by either a gas stream established with gas stream means or due to gravity through the inlet valve (112) and the material mix feed hose (12) controllable by an electronics to a collector of the movable locally separated printhead (2).

## Description

### TECHNICAL FIELD

The present invention describes an ambient-temperature or temperated pre-mixing and feeding assembly with a plurality of containers, feeding means and a feed hopper for pre-mixing and providing at least one or more materials in granule, pellet or powder form, for transport to a printhead of a 3D printing setup, a movably mountable printhead for a 3D printing setup, comprising a collector for raw material and an extrusion section with an extrusion screw in a extrusion channel, melting means and an extrusion nozzle for extrusion of melted material and a 3D printing setup comprising a collector for raw material in granules form and a movably mounted printhead, comprising an extrusion section with an extrusion screw, melting means and an extrusion nozzle for extrusion of melted material.

### STATE OF THE ART

Fused Deposition Modelling (FDM) 3D printing setups are optimised for rapid prototyping of complex shapes. However freedom of shape is no longer the only requirement for additive manufacturing (AM) techniques. Users require functional parts of a desired material composition and the expected material properties, but current FDM printers are limited to a few materials in filament form. Two materials can be printed in sequence only, whereas blending of two or more materials or the addition of fillers and additives at variable ratios is not possible. Hence, printing of three-dimensional parts with altering material compositions is not possible.

Conventional FDM printers use a single nozzle and melt setup for each material. Also, the traction force exerted on the filament and the conduction heat transfer to the filament core limit the build rate. Small particles however can be conveyed in large amounts and powder-based FDM allow for a faster print speed with mixing accuracy down to the particle size. Powders and granules are the most common form of thermoplastics. For that reason a powder-based approach avoids the need for filament fabrication.

US2011079936 describes a 3D printing setup with a melting chamber and at least one extrusion nozzle and a melt preparation in a general way. The materials are first melted, then mixed and extruded from a nozzle. Actuators feed pluralities of materials in a controlled way, varying the ratios of raw materials in the melting chamber. The ratio of materials in the extruded mixture may be dynamically varied in such a way that the composition of the extruded material varies in a substantially continuous gradient. The focus is set on hot melts and mixing in the melted state.

In US2015321419 a 3D printing setup with extruder assembly is disclosed. The setup contains a movable platform and a stationary printhead. The invention, and all of its embodiments, is a 3D printer that utilizes one or more extrusion screws to process any given material including, but not limited to, plastic, metal, composites and non-metals to build three-dimensional objects. The processed material is deposited on a moveable platform via force from the extrusion process. Motion is numerically controlled via a computer and one or more motors. As the extruder deposits material, a platform or the extruder is moved in one, two, or three dimensions at a predetermined vector. Once a layer of the object is created, the distance between the extruder nozzle and print surface is increased and the process is repeated until a three-dimensional shape is created.

US2016200024 discloses an extruder, capable of operating upon receipt of a supply of raw plastic feedstock, in contrast to many extruders used in the context of 3D printers, which operate only upon receipt of a supply of processed filament. While the extrusion process and the setup is disclosed in detail, US2016200024 does not disclose the ability to use a plurality of raw materials which can be dosed, mixed, compounded and extruded with a desired controlled fashion in a variable composition.

In US2015130101 a 3D printing setup is described, which shows a material inlet assembly with a hopper for feeding pellets by gravity into a collector of a printhead of a 3D printer setup. The pellets are fed via the collector to a heated extrusion unit, where the pellets are molten forming a melt, which is extruded by an extrusion screw and therewith used as "ink" for FDM process after extrusion through an extrusion nozzle. With this setup it is only possible to melt and extrude a single material or a predefined mixture of multiple materials in granular form. As our tests showed, it is tricky to reach a desired controlled mixture of raw materials, for example thermoplastic powders with additives in controlled ratios for reaching graded material transitions with locally variable material properties such as color, conductivity and stiffness. All this cannot be reached with the setup disclosed in US2015130101.

The advantage of dynamic changes in material composition while printing allows for spatial control over the properties and performance of the printed part. 3D printing of variable thermoplastic blends and color transitions by continuous mixing of plastic powders in a cold, unmolten state is novel to FDM.

### DESCRIPTION OF THE INVENTION

The object of the present invention is to create a reliable 3D printing setup enabling to continuously feed, mix and extrude granule material with thermoplastic and thermoplastic elastomer powders with additives in controlled ratios, reaching a desired controlled melt composition.
Graded material transitions with spatially controlled material composition with defined characteristics including but not limited to color, conductivity, toughness and stiffness are printed in a single print with a single extrusion nozzle in a controlled manner.

The problem is solved with a 3D printing setup comprising a pre-mixing and feeding assembly according to claim 1 with accurate volumetric dosing and transport of raw material and can be optimized with a movably printhead 2 with a collector according to claim 11.
The apparatus has a single or twin-screw extruder positioned in an extrusion barrel with multiple controllable temperature zones.

The disclosed 3D printing setup is capable to continuously dose, mix, feed, melt and extrude a plurality of materials in granular form to achieve extrusion of a compound material containing one or more components, the ratios of which can be dynamically adjusted while printing, while the homogeneity of the melt is refined. Using a plurality of raw materials instead of a single raw material or a predefined mixture, allows for spatially-controlled altering extrudate composition and the material properties of the extrudate, by varying the ratios of the individual components of the compound material while printing.

The infeed assembly can be stationary and decoupled from the printhead. In that case raw materials are continuously fed from the stationary infeed assembly to the printhead/extruder assembly resulting in smaller overall weight of the printhead allowing high printing speeds.

The invention intents to substitute filament-based FDM with a flexible powder-based FDM technology, shifting the focus from shape in rapid prototyping to functional parts in rapid manufacturing.

### BRIEF DESCRIPTION OF THE DRAWINGS

A preferred exemplary embodiment of the subject matter of the invention is described below in conjunction with the attached drawings.
- Figure 1: shows a perspective view of pre-mixing and feeding assembly and a printhead as parts of a 3D printing setup.
- Figure 2: shows a more detailed perspective view of the circular inset of figure 1, while
- Figure 3: shows a perspective view in a close-up of a feeding screw, which is inserted in a pivot bearing with connection to a inner room of a container.
- Figure 4: shows a sectional view of an inlet valve, which can be connected to a feed hose and a material mix feed hose.
- Figure 5a: shows a sectional view of the printhead, from a mixture inlet to the extrusion nozzle, while
- Figure 5b: shows another embodiment of the extrusion section of the printhead in a schematic drawing.
- Figure 6: shows a perspective side view of an extrusion screw as part of the print head, providing a melt.

### DESCRIPTION

A powder-, granules or pellet-based 3D printing setup for thermoplastic Fused Deposition Modelling (FDM) is disclosed. The 3D printing setup consists of a pre-mixing and feeding assembly 1 and a printhead 2. The pre-mixing and feeding assembly 1 provides the premix of a plurality of materials in granules, pellet or powder form. The pre-mixed material is transported by means of the pre-mixing and feeding assembly 1 to the 3D printhead 2. While the 3D printhead 2 has to be movable, the pre-mixing and feeding assembly 1 is can be stationary. Electronics, motors, compressors or gas tanks are not depicted and described here in detail. The person skilled in the art knows electronic components and software to run such 3D printing setups.

The pre-mixing and feeding assembly 1 comprises a feed hose 10, a material inlet assembly 11, characterized with the dotted line rectangle, and a material mix feed hose 12. While material inlet assembly 11 are stationary mounted, the feed hose 10 and/or material mix feed hose 12 are at least partly movably mounted. The material mix feed hose 12 provides the connection between the stationary material inlet assembly 11 and the movable mounted printhead 2.

The material inlet assembly 11 comprises at least two containers 110, 110' for storing different raw materials or "ink" materials. Here the containers 110, 110' have a conical shape and an internal space is leading to an opening and a feeding screw recess in every container 110, 110'. Every container 110, 110' shows a pivot bearing 1101, 1101' in the feeding screw recess, in which a feeding screw 111, 111' is rotatable placed in any container 110, 110'. The feeding screw recess and the pivot bearing 1101, 1101' is operatively connected to the container interior, such, that raw material can get to the feeding screws 111, 111' as possible feeding means. The raw materials can be supplied by electronically steering of the feeding screws 111, 111' into an inlet valve 112, comprising a feed hopper 1120.

The material mix feed hose 12, usually a flexible tubing, establishes the connection between the stationary pre-mixing and feeding assembly 1 and the movable printhead 2. A gas/material mix stream, powered by gas stream means, establishing a gas flow, usually an air flow, is therewith fed into the printhead 2 in a controllable way, by a non-depicted electronics and gas stream means. The gas stream means could comprise a compressor or gas source/tank. As indicated with arrows a gas stream respectively a gas/material stream is established by the gas stream means, feeding pre-mixed material through the material mix feed hose 12 into the print head 2. The movable mounted print head 2 is spaced apart from the stationary mounted material inlet assembly 11.

The printhead 2 or extruder assembly 2 comprises a collector and an extrusion section. The printhead 2 is movably mounted as part of the 3D printing setup as indicated with the crossed arrows. Necessary motors, mechanical mounting, electronics and heating facilities are not shown here for better understanding. In the here described example the printhead 2 can comprise a collector in form of a cyclone separator 20 in which interior a gas material mix is fed. It is also possible to use another collector, in which mixed material is fed via gravity.

The cyclone separator 20 is mounted on a cyclone separator connection 21, in which an extrusion screw 22 is rotatable mounted. Mixed material can be fed from the material outlet 206 of cyclone separator 20 by the extrusion screw 22 via a heat break component 23 into a heated extrusion unit 24, before the melt is extruded through a extrusion nozzle 243 of the extrusion unit 24.

Having the raw material containers 110, 110' respectively the pre-mixing and feeding assembly 1 stationary and decoupled from the printhead 2, the setup allows for smaller overall weight of the movable printhead 2 and thus easier and faster movement of the said printhead 2 to achieve faster printing, using less powerful positioning motors.

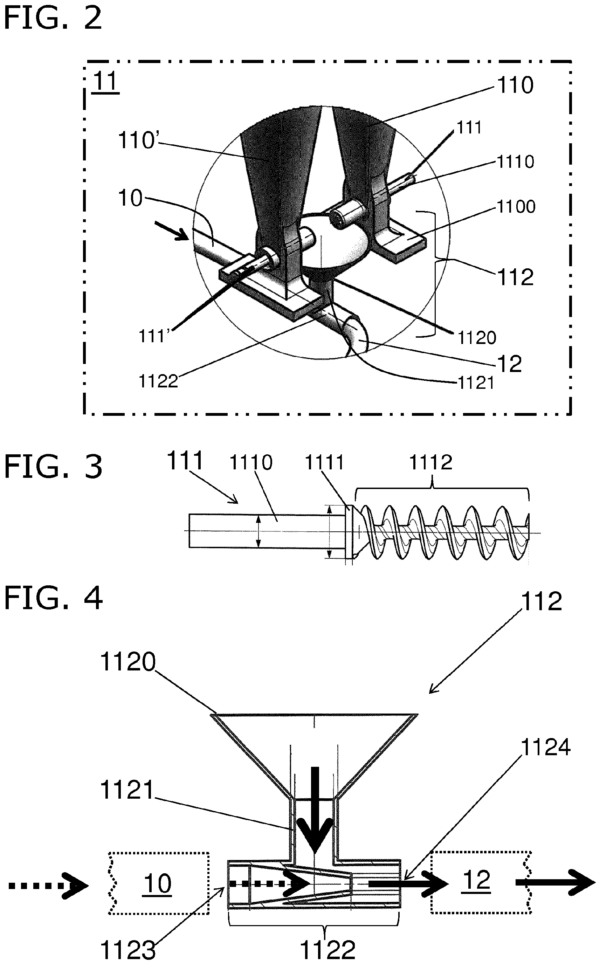

Fixtures 1100 of the container 110, 110' are integrally formed with the container 110, 110' as depicted in figure 2. Also the bottom openings and the feeding screw recesses are integrally formed at the container 110, 110'. The feeding of the raw materials from the container 110, 110' is carried out by the feeding screws 111, 111' into the interior of the feed hopper 1120 in which a first pre-mixing is done.

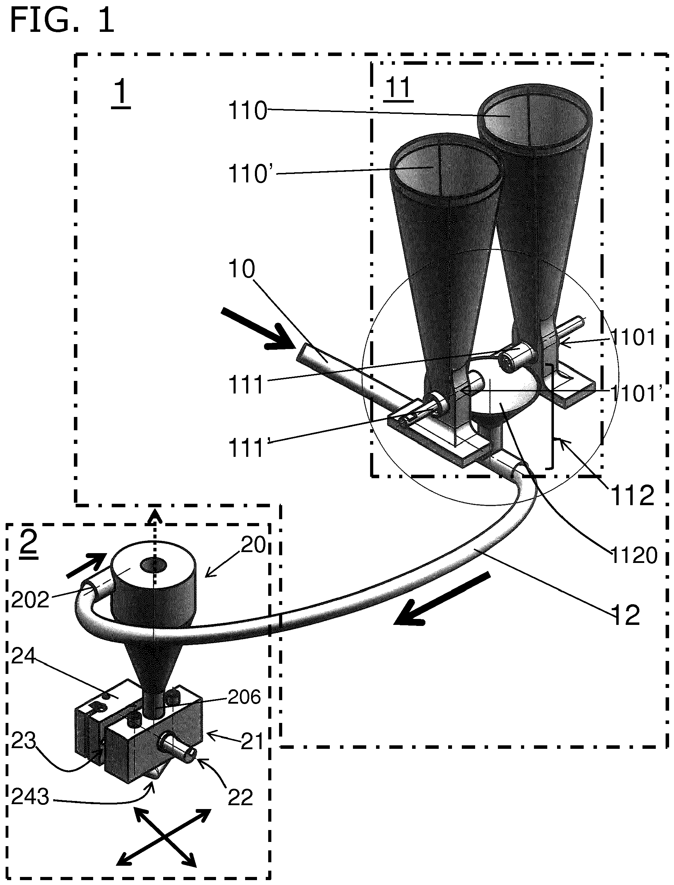

As shown in figure 3, the feeding screws 111, 111' of the pre-mixing and feeding assembly 1 comprising a bolt section 1110, a stop 1111 and a thread section 1112. While rotating with a not shown motor inside of the pivot bearings 1101, 1101' as shown in figure 1, raw material can be fed by the feeding screws 111, 111' form the container 110, 110' into the feed hopper 1120 of the inlet valve 112.

Here at the bottom opening of the feed hopper 1120 a gas inlet 1123, a gas/material mixing piece 1122 and a gas/material outlet 1124 are attached. For improving the pre-mixing, a transition piece 1121 between the inner room of the feed hopper 1120 and the gas/material mixing piece 1122 is placed. In advanced construction as shown here, the Inlet valve 112 is integrally formed or moulded with all its components, feed hopper 1120, transition piece 1121, gas/material mixing piece 1122, gas inlet 1123 and gas/material outlet 1124 in one piece. The inner walls of the inlet valve 112 are formed to establish the known Venturi effect by a constricted section. Therewith material can be sucked by a higher gas speed underneath the centre of the feed hopper 1120, due to the constricted section.

The feed hose 10 is connected to the gas inlet 1123 of the inlet valve 112, while the material mix feed hose 12 is connected to the gas/material outlet 1124. By a gas stream supplied to the feed hose 10, as marked with the dotted arrow, pre-mixed material, marked with the thick arrow, can be transported from the feed hopper 1120 to the printhead 2. Usually compressed air can be used for the gas stream, while the gas pressure has to be such high, that the material granules mix can be transported. The gas stream means can either pump gas in direction from the feed hose 10 to the printhead 2 or suck a material/gas mix, while air is sucked through the feed hopper 1120.

Multiple source raw materials are separately stored in one or more conical steep-walled containers 110, 110' with the opening via the feeding screws 111, 111' at the bottom into the feed hopper 1120. Raw material from the container 110, 110' can be fed by the feeding screws 111, 111' with different feed rates controlled by stepper motors that drive the feeding screws 111, 111' Precise dosing in the sub gram range is achieved. The containers 110, 110' can be closed or open at their top and consist of plastic but can also be made of any other material.

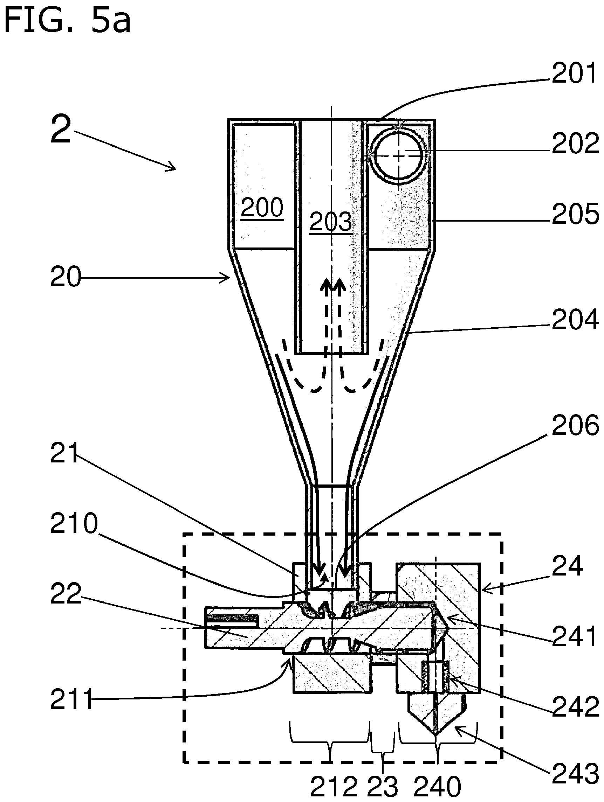

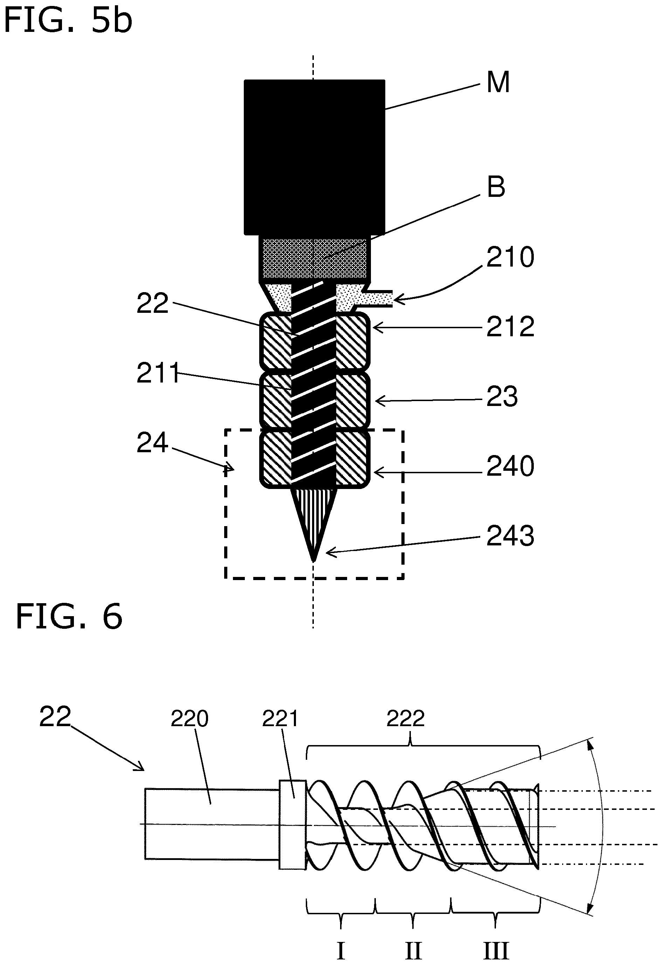

As depicted in figure 5 the printhead 2 comprises a cyclone separator 20 with a cyclone cover 201 and a cyclone interior 200, where a gas/material mix can be introduced via a mixture inlet 202. Gas can escape via a cyclone separator exhaust 203 or immersion tube 203, while material is separated from the material/gas stream and sinks through a material outlet 206 at a bottom of the cyclone separator in direction of gravity and can leave the cyclone separator 20. The cyclone separator 20 here shows a conical section 204 and a cylindrical section 205. The cyclone separator exhaust 203 extends in the cyclone body from the conical section 204 through the cylindrical section 205 and the cyclone cover 201.

On their way through the material mix feed hose 12, the pre-mixed powders get carried along and mixed by the constant flow, in particular airflow. The material mix feed hose 12 ends in the cyclone separator 20, where the pre-mixed powders get further mixed and separated from the airflow. While the particles loose momentum and slow down due to collisions with the cyclone separator wall and other particles, the gas is free to evacuate through the cyclone separator exhaust 203, indicated by dotted arrows. An additional filter on top of the cyclone separator exhaust 203 prevents contamination by particles too small to be separated by the cyclone separator 20. This filter can build the cyclone cover 201.

The cyclone separator 20 is fixed to the cyclone separator connector 21 of the printhead 2, in which a material feedthrough 210 and an extrusion channel 211 are recessed. Mixed material is falling through the material outlet 206 of the cyclone separator 20 via the material feedthrough 210 in the extrusion channel 211 of the cyclone separator connector 21. The extrusion screw 22 is partly introduced in the extrusion channel 211 and operatively respectively rotateably connected to the cyclone separator connector 21. A motor for driving the extrusion screw 22 is not depicted here, but it would of course be placed directly or indirectly at the end of the extrusion screw 22.

A separation efficiency of 90% or higher is reached with particle sizes down to 50 pm. Once the particles have slowed down, they fall through the material outlet 206 of the cyclone separator 20 onto the extrusion screw 22. It takes less than 3s for a particle to be transported from the material inlet assembly 11 to the cyclone separator connector 21.

The printhead 2 comprises an extrusion section, comprising the cyclone separator connector 21, the heat break 23 and the heated extrusion unit 24, comprising a cold zone 212, the heat break 23 and a heating zone 240, which have different temperatures respectively temperature gradients. The three zones are assembled horizontally in line with the extrusion channel 211, here a centrally formed extrusion channel 211 in the cyclone separator connection 21, with the cyclone separator 20 vertically positioned on top of the cold zone 212. Good results were achieved with an extrusion section with a total length (sum of 212, 23, 240) of 35 mm in direction of the extrusion channel 211.

If the cyclone separator 20 is used as collector, pre-mixed material is introduced in a direction parallel to the later printing direction respectively extrusion direction in direction of the extrusion nozzle 243. In other embodiments instead of the collector in form of a cyclone separator 20, other designs can be used. For example a collector driven by gravity only, wherein pre-mixed material is fed without a gas stream to the extrusion section of the printhead.

So far, the pre-mixing and feeding assembly 1 and the cyclone separator 20 were not heated and accordingly the raw material and the pre-mixed material with and without gas stream were not heated and under room temperature. The pre-mixed material still consists of unmelted solid particles in form of powder, granules or pellets.

After passing the cyclone separator 20, the mixed material particles are fed into the cold zone 212 as part of the extrusion channel 211 and brought in contact with the extrusion screw 22. This zone is the starting point of the extrusion screw 22. To prevent sticking and clogging of the mixed material in form of a powder caused by premature melting of the powder in the material feedthrough 210, the cold zone 212 is cooled. In one embodiment the cold zone 212 is cooled with water that passes through two interconnected channels perpendicular to the extrusion screw 22. Aluminium is chosen as a built material for the cyclone separator connector 21 due to its large heat transfer coefficient. That way it can be assured that the cold zone 212, respectively the cyclone separator connector 21 and most importantly the material feedthrough 210 are cooled to room temperature or lower. At this point the extrusion screw 22 has the largest channel depth to take up all the powder falling in from the cyclone separator 20.

In order to facilitate a large temperature gradient of > 200 °C along the shortest possible distance, a heat break component 23 is positioned between the cold zone 212 and a hot heating zone 240. The heat break component 23 comprises a cylindrical part of PEEK with the extrusion channel 211 opening in the centre. PEEK was chosen due to its high temperature resistance (> 300 °C) and low heat transfer coefficient (0.25 W/m2K). The heat break component 23 not only shields the cold zone 212 from excessive heat exposure but also establishes a well-defined thermal gradient necessary for melt extrusion. The thermal gradient is controlled by the materials specific thermal conductivity and the length of the heat break component 23.

Attached to the heat break component 23 opposite to the cyclone separator connection 21 is the heated extrusion unit 24 located. The heated extrusion unit 24 is the last zone of the extrusion section in direction of the extrusion channel 211. With a non-depicted electronics the extrusion temperature is set and the mixed fed-in material is melted on its way through a blind hole 241 and an outlet bore 242 in the heated extrusion unit 24. Here the horizontally oriented extrusion channel 211 ends in the centre of the blind hole 241 of the heated extrusion unit 24 and is lead with a 90° angle in the outlet bore 242. The extrusion nozzle 243 is oriented aligned with the outlet bore 242. The used extrusion nozzles 243 varied between 10 µm and 1 cm. Here a cartridge heater is placed vertically inside the heated extrusion unit 24 made of aluminium. Temperatures of up to 500 °C can be reached. A thermocouple continuously measures the temperatures and is used to adjust the melting and extrusion temperature by electronics. The temperature is increased from below room temperature respectively room temperature in the cold zone 212, with a temperature gradient in the heat break component 23 to the heated extrusion unit 24 with the highest temperature. Due to non-depicted temperature sensors, a heating source and electronics, a controlled heating and therewith melting of the mixed material, while controlled rotation of the extrusion screw 22 is achievable.

Figure 5b shows another embodiment of the extrusion section of the printhead 2 in a schematic way. Due to the fact, that the collector can be formed in different ways, only the extrusion section is depicted. Here a motor M is connected via a coupling manifold B to the extrusion screw 22. The pre-mixed material is fed through the material feedthrough 210, here from a direction perpendicular to the later printing direction or extrusion direction. In this setup, motor M and extrusion screw 22 are oriented parallel to the extrusion nozzle 243.

The extrusion screw 22 as depicted in figure 6 is fabricated out of PEEK due to its mechanical stability at working temperatures as high as 300 °C. The extrusion screw 22 comprises a bolt section 220, a mechanical stop 221 and a thread section 222. The bolt section 220 and the mechanical stop 221 are at least partly protruding out of the extrusion channel 211. The thread section 222 comprises different parts with a constant pitch and increasing shaft diameter to compress and extrude the molten material through the blind hole 241, the outlet bore 242 and the extrusion nozzle 243 opening.

Similar to the three temperature zones of the extrusion section, the extrusion screw 22 also has three zones, namely the feed zone I, the melt zone II and the metering zone III. The feed zone I has the deepest channel depth and is located in the cold zone 212 of the extrusion section. It ensures that all the powder is taken in by the extrusion screw 22 and fed towards the heat break component 23, where the particles start to melt. To compensate for the reduction in volume of the now molten particles and to keep up a high enough feed pressure, the shaft diameter in the melt zone II steadily increases while the channel depth decreases, compressing and degasing the melt. The melt then enters the metering zone III with a constant channel depth (here of 1 mm) in the heated extrusion unit 24. The metering zone III is designed to ensure constant extrusion rate of the melt.

As source material, thermoplastic granules with a diameter of < 1 mm down to nm are used. Common source materials are known thermoplastic and thermoplastic elastomers, including Polylactic acid (PLA) or Acrylonitrile butadiene styrene (ABS), but also thermoplastics such as PA, PP, PC, PS, PVC, PMMA, Nylon, TPU and others can be used.
In addition to thermoplastic powders, functional fillers and additives can be employed as source material. Such additives include metal and ceramic powders, salts, capsules, pharmaceuticals and reinforcing fibers such as carbon and glass fibers. Fillers and additives can also be precompound with a thermoplastic at a known concentration and used as a source material composite. This will improve the dosing accuracy and allow using additives with particles sizes smaller than 50 pm that would otherwise exceed the separation capability of the cyclone separator 20.

In a modification of the material inlet assembly 11, the dosed feeding of raw material from a container 110, 110' can be done with solenoid valves, replacing the feeding screws 111, 111'.

The pre-mixing and feeding assembly 1 comprise gas stream means, in particular a compression air pump, for building the gas stream, a Venturi valve as inlet valve 112 and PTFE tubing, forming a feed hose 10 and/or material mix feed hose 12. Once the pressure pump is on, the venturi valve 112 locally generates a negative pressure in the PTFE tubing 12 below the feed hopper 1120 that sucks in the dosed material. Low flow rates of less than 35 cfm are sufficient for efficient collection and transport of the dosed material through the material mix feed hose 12. PTFE was chosen due to its low friction coefficient but can be replaced by any other material, especially with a lower triboelectric material such as polyester.

The positive air pressure used for source material transportation can be replaced by applying negative pressure at the gas/material outlet 1124, material mix feed hose 12 or cyclone separator exhaust 203 using gas stream means in form of a vacuum cleaner or a reversed fan, for generating the gas stream/gas-material stream from the feed hopper 1120 in direction to the printhead 2.

Instead of a water-cooling system, the cold zone 212 can also be temperated with other cooling fluids such as air. The components cyclone separator connection 21, extrusion screw 22, heat break 23 and/or heated extrusion unit 24 can be fabricated using other materials such as stainless steel.

With the disclosed 3D printing setup a filament-fee 3D printing is possible, using raw material in form of powder, granules or pellets. The feeding of the material mix entering the printhead 2 is optimized.

### LIST OF REFERENCE NUMERALS

1 pre-mixing and feeding assembly
   10 feed hose
   11 material inlet assembly (stationary, motors and electronics not shown)
      110, 110' container (conical, internal space)
         1100 fixture for container
         1101 pivot bearing (Drehlager) / integrally moulded/formed
      111, 111' feeding screw (with external thread)
         1110 bolt section
         1111 stop
         1112 thread section
      112 inlet valve (one piece, all parts integrally formed)
         1120 feed hopper
         1121 transition piece
         1122 gas/material mixing piece
         1123 gas inlet
         1124 gas/material outlet
   12 material mix feed hose (flexible tubing)
2 printhead / extruder assembly (movable, motors/electronics/heating facility not shown)
   20 cyclone separator/collector
      200 cyclone interior (cylindrical or conical container)
      201 cyclone cover
      202 mixture inlet
      203 cyclone separator exhaust / immersion tube
      204 conical section
      205 cylindrical section
      206 material outlet
   Extrusion section
   M motor
   B coupling manifold
   21 cyclone separator connection (metal, cold)
      210 material feedthrough
      211 extrusion channel / extrusion screw feedthrough (fully crossing holder 21)
      212 cold zone
   22 extrusion screw
      220 bolt section
      221 mechanical stop
      222 thread section/external thread (variable core diameter)
         I feed zone
         II compression zone
         III pressure build-up zone
   23 heat break component (Abstandshalter)
   24 heated extrusion unit
      240 heating zone
      241 blind hole
      242 outlet bore
      243 extrusion nozzle

## Claims

1. An ambient-temperature or temperated pre-mixing and feeding assembly (1) with a plurality of containers (110, 110'), feeding means and a feed hopper (1120) for pre-mixing and providing at least one or more materials in granule, pellet or powder form, for transport to a printhead (2) of a 3D printing setup,
**characterized in that**
the pre-mixing and feeding assembly (1) comprises a material inlet assembly (11), comprising
the plurality of containers (110, 110'), the feeding means (111, 111') connected to the container (110, 110'), an inlet valve (112) with the feed hopper (1120) for dosed pre-mixing of raw material
and a material mix feed hose (12), for transportation of pre-mixed material mix from the feed hopper (1120) and the inlet valve (112) by either a gas stream established with gas stream means or due to gravity through the inlet valve (112) and the material mix feed hose (12) controllable by an electronics to a collector of the movable locally separated printhead (2).

2. Pre-mixing and feeding assembly (1) according to claim 1, wherein the inlet valve (112) comprises a gas inlet (1123) connected to a feed hose (10), a gas/material mixing piece (1122) with an inner constricted section for providing the Venturi effect, connected directly or indirectly to the feed hopper (1120) and a gas/material outlet (1124) connected to the material mix feed hose (12), for transportation of the pre-mixed material via a gas material stream.

3. Pre-mixing and feeding assembly (1) according to one of the preceding claims, wherein a constant gas flow, in particular airflow is set by a gas source in a feed hose (10), a gas/material mixing piece (1122) and the material mix feed hose (12), wherein the gas source is a compressor or gas tank.

4. Pre-mixing and feeding assembly (1) according to one of the preceding claims, wherein the feed hose (10) and/or material mix feed hose (12) are flexible moveable tubings.

5. Pre-mixing and feeding assembly (1) according to one of the preceding claims, wherein the feed hopper (1120) is an integral part of the inlet valve (112) and directly moulded to the inlet valve (112) or indirectly moulded separated by a transition piece (1121) to the inlet valve (112).

6. Pre-mixing and feeding assembly (1) according to one of the preceding claims, wherein a pivot bearing (1101, 1101'), in which a feeding screw (111, 111') as feeding mean is rotatable mounted, is provided in the container (110, 110'), wherein the pivot bearing (1101, 1101') is operatively connected to the container interior.

7. Pre-mixing and feeding assembly (1) according to claim 6, wherein the feeding means (111, 111') are feeding screws (111, 111'), comprising a bolt section (1110), a stop (1111) and a thread section (1112).

8. Pre-mixing and feeding assembly (1) according to one of the claims 1 to 6, wherein the feeding means (111, 111') are solenoid valves, which are operatively connected with the container (110, 110') for dosing material into the feed hopper (1120).

9. Pre-mixing and feeding assembly (1) according to one of the preceding claims, wherein the material inlet assembly (11) is stationary mounted, only connected by material mix feed hose (12) in form of a flexible moveable tubing to the locally separated movable printhead (2).

10. Pre-mixing and feeding assembly (1) according to claim 2, wherein the gas stream means are arranged at the material mix feed hose (12) or a gas/material outlet (1124) of the inlet valve (112), able to suck a material/gas mix through the feed hopper (1120) and the material mix feed hose (12) to the collector of the printhead (2).

11. Movably mountable printhead (2) for a 3D printing setup, comprising a collector for raw material and an extrusion section with an extrusion screw (22) in a extrusion channel (211), melting means and an extrusion nozzle (243) for extrusion of melted material,
**characterized in that**
the collector and the extrusion section are formed and orientated relative to each other, that pre-mixed material in form of granules, pellets or powders is fed through a material feedthrough (210) from a direction perpendicular or parallel to the extrusion direction, wherein the extrusion section is linear proceeding comprising along its path in chronological order a cold zone (212), a heat break component (23), a heating zone (240) and the extrusion nozzle (243).

12. Movably mounted printhead (2) according to claim 11, wherein the extrusion section comprises a material feedthrough (210) orientated perpendicular to the extrusion screw (22).

13. Movably mountable printhead (2) according to claim 11 or 12, wherein the collector of the printhead (2) is a cyclone separator (20), comprising a mixture inlet (202) connectable to a material mix feed hose (12), a cyclone interior (200) in which particles are separable from a granule/gas stream by sinking of the premixed material compound to a cyclone separator ground with material outlet (206) in connection with the extrusion section of the printhead (2), while excessive gas can escape through a cyclone separator exhaust (203).

14. Movably mountable printhead (2) according to claim 13, wherein the cyclone separator (20) is connected to a cyclone separator connection (21) of the extrusion section, wherein the cyclone separator connection (21) comprises a material feedthrough (210) to the cyclone separator (20) and an extrusion channel (211) in which an extrusion screw (22) is rotatable mounted.

15. Movably mountable printhead (2) according to claim 13 or 14, wherein the cyclone separator (20) is covered with a cyclone cover (201) in form of a filter, filtering out particles of the exhaust gas.

16. Movably mountable printhead (2) according to one of the claims 11 to 15, the extrusion section ends in the extrusion nozzle (243) angled orientated to the extrusion screw (22).

17. 3D printing setup comprising a collector for raw material and a movably mounted printhead (2), comprising an extrusion section with an extrusion screw (22), melting means and an extrusion nozzle (243) for extrusion of melted material,
**characterized in that**
the 3D printing setup comprises a pre-mixing and feeding assembly (1) according to one of the claims 1 to 10, which is mounted stationary and locally distanced from a movably printhead (2) according to one of the claims 11 to 16.
